# EUROPEAN PATENT APPLICATION

(11) **EP 4 464 528 A1**
(43) Date of publication of application: **20.11.2024**
(21) Application number: 24176405.9
(22) Date of filing: 16.05.2024
(51) Int. Cl.: B60G 99/00, B60G 15/06, B62D 33/06

(54) **IMPROVED SUSPENSION SYSTEM FOR WORK VEHICLE**

(30) Priority: 16.05.2023 IT 202300009879
(71) Applicant: CNH Industrial Italia S.p.A., 10156 Torino (IT)
(72) Inventor: PESCIONE, Fabio, 10156 Turin (IT); FENILI, Francesco, 10156 Turin (IT); PARISI, Fabio, 10156 Turin (IT)
(74) Representative: CNH Industrial IP Department

(57) **Abstract**

Suspension system (4) for a work vehicle (1) provided with a cab (2) and a chassis (3), and configured to damp the relative movement between cab (2) and chassis (3), the suspension system (4) comprising a front suspension portion (5) and a rear suspension portion (6) along a longitudinal axis (A) of vehicle (1), the rear suspension portion (6) comprising a connection portion (12) and a damping system (13), the connection portion (12) comprising an upper extremity (12b) and a lower extremity (12a) along a vertical direction axis (B), the upper extremity (12a) being operatively connected to the cab (2) via damping system (13) and lower extremity (12a) being fixedly connected to chassis (3) .

## Description

### TECHNICAL FIELD

The present invention concerns a suspension system for a work vehicle.

The present invention finds its preferred, although not exclusive, application in a suspension system for specialty tractors. Reference will be made to this application by way of example below.

### BACKGROUND OF THE INVENTION

Work vehicles such as agricultural vehicles and in particular specialty vehicles e.g. vineyard vehicles needs more and more to increase the comfort of the driver.

One of the most important factors while considering comfort of using a work vehicle is due to suspension system. Indeed, suspension system has a key importance in avoiding transmission of vibration. Such aim is furthermore felt in agricultural vehicles that moves on ground and in specialty vehicles that moves on impervious grounds.

However, specialty vehicles have usually uncommon dimensions and, in particular, vineyard vehicles, have small dimensions.

These uncommon dimensions avoid the use of standard suspension systems that are usually used on agricultural tractors
Therefore, the need is felt to provide work vehicles such as specialty vehicles with improved suspension systems that allows to be mounted thereon while maintaining high operational performances.

An aim of the present invention is to satisfy the above mentioned needs in a cost-effective and optimized manner.

### SUMMARY OF THE INVENTION

The aforementioned aim is reached by a suspension system and a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a vehicle and suspension system according to the invention;
- Figure 2 is a lateral schematic view of the vehicle and the suspension system of figure 1;
- Figure 3 is a rear schematic view of the vehicle and the suspension system of figure 1;
- Figure 4 is an enlarged portion of figure 3;
- Figures 5a-5c show top schematic views of a first embodiment of a portion of the suspension system of the invention in different operational configurations; and
- Figures 6a-6c show top schematic views of a second embodiment of a portion of the suspension system of the invention in different operational configurations.

### DETAILED DESCRIPTION OF THE INVENTION

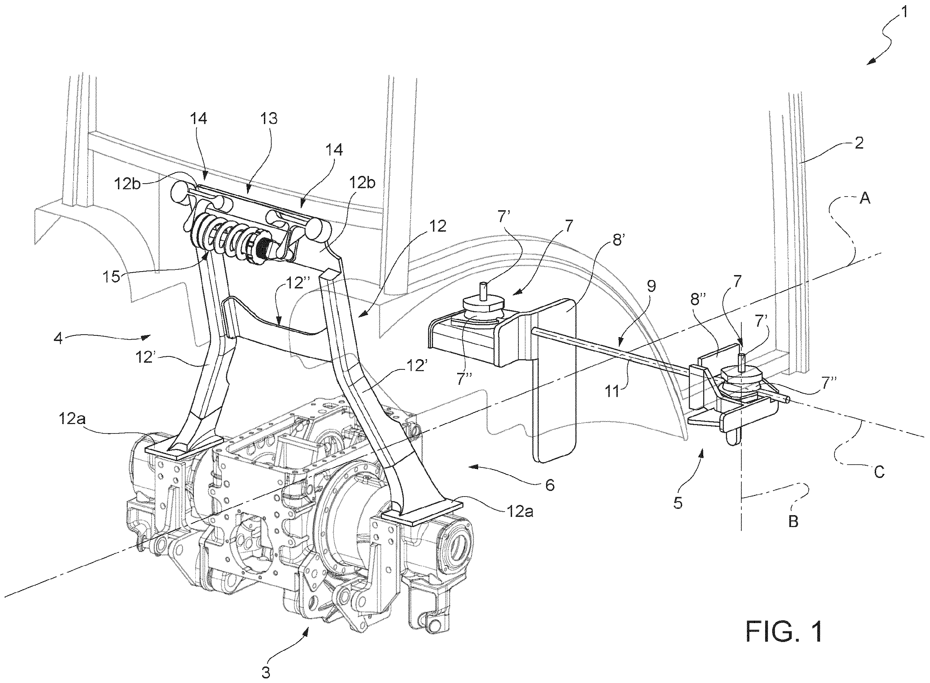

Figure 1 discloses a portion of a work vehicle 1, in particular an agricultural vehicle such as a tractor and in further detail a specialty tractor such as a vineyard vehicle.

Vehicle 1 comprises a cab 2 carried in a movable manner with respect to a chassis 3 via a suspension system 4. In detail, suspension system 4 comprises a front suspension portion 5 and a rear suspension portion 6 with respect to vehicle longitudinal direction axis A and configured to allow suspension of the cab with respect to a front and a rear portion of chassis, such as a front and a rear axle of the tractor.

In particular the front suspension portion 4 comprises bumper means 7 interposed between respective support elements 8', 8" that are fixedly carried by the vehicle chassis 3.

Such support elements 8', 8'' are a left and a right support element 8', 8'' with respect to longitudinal axis A and symmetrically placed with respect to this latter.

The bumper means 7 each comprises a connection element 7' fixedly carried by the cab 2 and a deformable element 7", such as air springs or similar devices, operationally interposed between the connection element 7' and the respective support elements 8', 8".

The deformable element 7" is configured to vary its extension along an inclined axis B, e.g. a vertical axis perpendicular to longitudinal axis A, thereby varying the space between connection element 7' and the respective support elements 8', 8".

The bumper means 7 are connected together by stabilizer means 9 such as a rod element 11 that is supported in a rotatably free manner between support elements 8', 8'' and is configured to allow rotation about a transversal axis C perpendicular to both longitudinal and vertical axis A, B.

Rear suspension portion 6 essentially comprises a connection portion 12 and a dampening system 13, the connection portion 12 is rigidly connected to one side to the chassis 3, i.e. on rear axle, and on the other side to dampening system 13. This latter operatively connects together the connection portion 12 to the cab 4.

In detail, the connection portion 12 comprises a pair of legs 12', 12'' extending between a lower extremity portion 12a fixedly connected to chassis 3 and an upper extremity portion 12b connected to the dampening system 13.

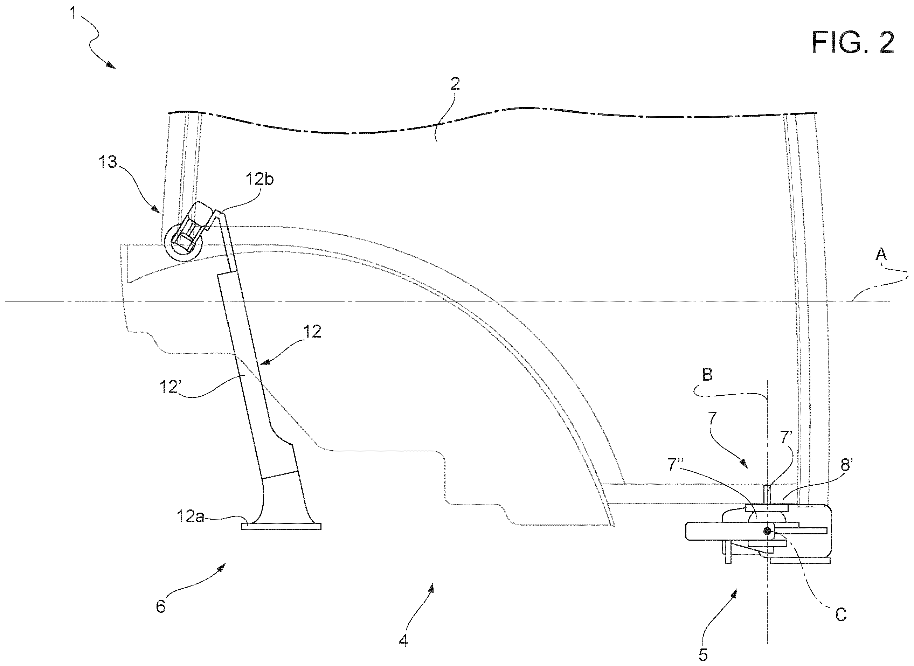

As better shown in figure 2, legs 12', 12" extends along vertical axis B, in particular inclined with respect to this latter and to longitudinal axis A. In greater detail, legs 12', 12'' defines an obtuse angle faced to front suspension portion 5 with longitudinal axis A.

Preferably, connection portion 12 is H-shaped and therefore further comprises a transversal element 12'' connecting together the legs 12', 12'' and extending along transversal axis C directions between the lower and upper extremities 12a, 12b. In particular, the connection portion1 2 may be realized as a one piece, monolithic, element.

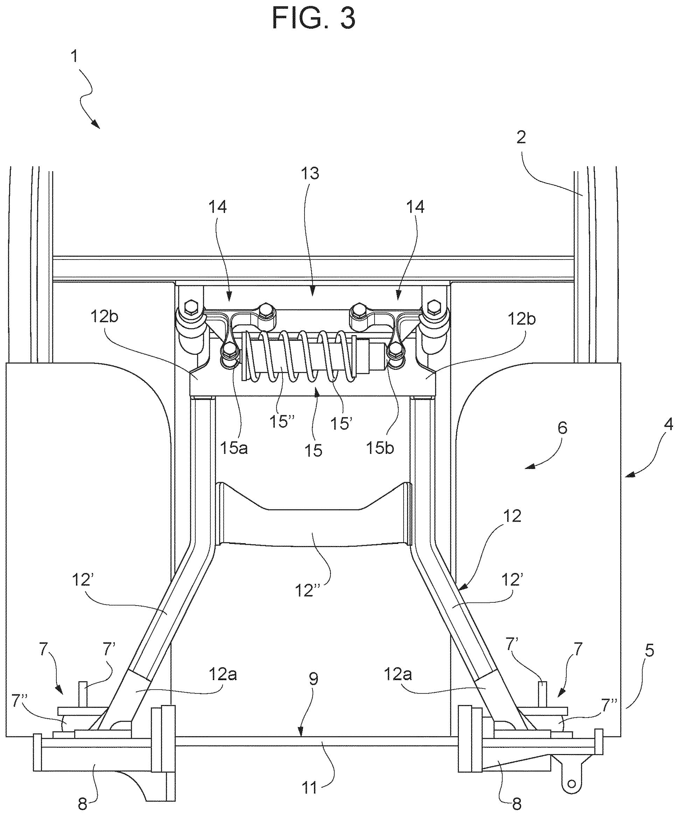

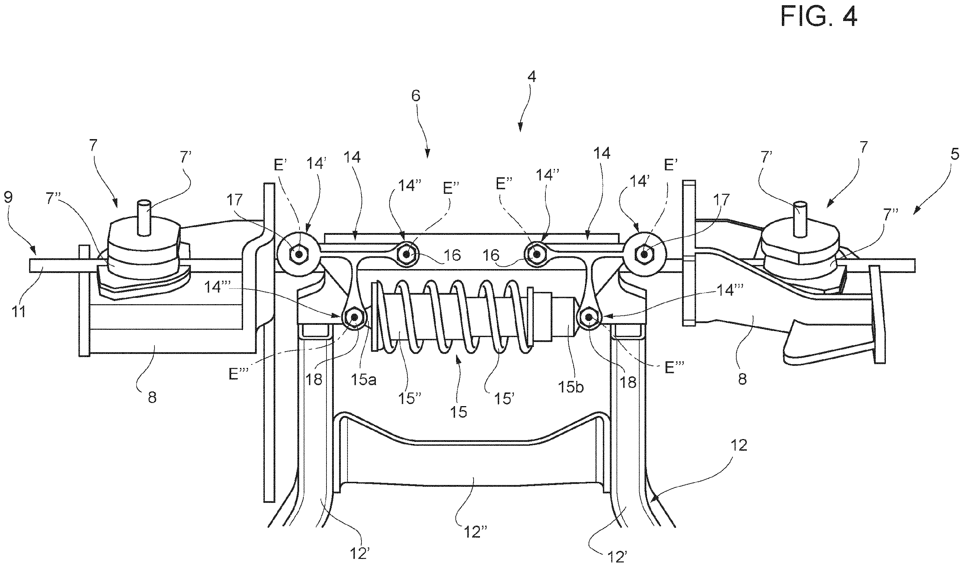

The dampening system 13 (see in details figures 3 and 4) comprises a pair or rockers 14 and dampening means 15. The rockers 14 are operationally interposed between the cab 4, the connection portion 12 (i.e. to chassis 3) and connected together via dampening means 15 , as better detailed in the following.

Rockers 14 defines three connection points 14', 14'', 14‴ configured to respectively being operationally connected to cab 2, to connection portion 12 (i.e. to chassis 3) and to dampening means 15.

In detail, the three connection points 14', 14'', 14‴ are connected to the aforementioned elements via respective hinge connection 16, 17, 18. Each hinge connection defines a rotation axis E', E'', E‴ with axis of rotation parallel to longitudinal axis A, therefore one to the other.

In further detail, the second hinge connection 17, i.e. the hinge connection associated to the second connection point 14" comprises a so-called silent block, i.e. anti-vibration means as per se known in the art.

In particular, rockers 14 have therefore a trianguloid shape wherein the connection points 14', 14", 14‴ corresponds to vertexes of such trianguloid shape.

In particular, rockers 14 define two arms, a first arm connecting the first and second connection points 14', 14'' and a second arm connecting the third connection point 14" to the first arm.

In detail, rockers 14 may be realized as one piece, i.e. monolithic. In further derail, as shown in figure 4, in a rest condition, i.e. in a stand-still and unloaded condition of the vehicle 1, the rocker 14 are positioned in a manner so that the first arm is substantially parallel to transversal axis C direction while second arm is substantially parallel to vertical axis B direction.

In further detail, rockers 14 are faced one to the other so that the second connection points 14" are placed outer with respect to third connection points 14' and so that the third connection points are placed in an intermediate position along transversal axis C direction with respect to first and second connection points 14', 14''.

As said, rockers 14 are connected together via their third connection points 14'' to the damping means 15. Accordingly, damping means 15 comprises a first extremity 15a connected to the third connection point 14‴ of one rocker and a second extremity 15b connected of the the third connection point 14‴ of one rocker 14.

The damping means 15 in detail comprises a cylinder 15', such as a hydraulic cylinder comprising a casing, for instance connected to the first extremity 15a as in the shown embodiment and a rod coupled to the casing and configured to slide therein, for instance connected to the second extremity 15b as in the shown embodiment.

First and second extremities 15a, 15b are in particular fixedly carried by the portion of the cylinder 15' and define with rockers 14 the hinges 18.

Damping means 15 further comprises elastic means 15", such as a spring, operationally interposed between the first and the second extremities 15a, 15b and configured to act in parallel to cylinder 15' action.

In the disclosed embodiment the elastic means 15'' comprises into detail a helicoidal spring housed about the cylinder 15'.

Due to above arrangement, the damping means 15 are placed vertically, i.e. along axis B direction, below the first rocker arm and in particular, in the above defined rest position, the damping means 15 are parallel to transversal axis C direction.

In the embodiment of figures 1 to 5a-5c, the second connection points 14'' are realized separated one with respect to the other and each connected via a respective hinge to the connection portion 12.

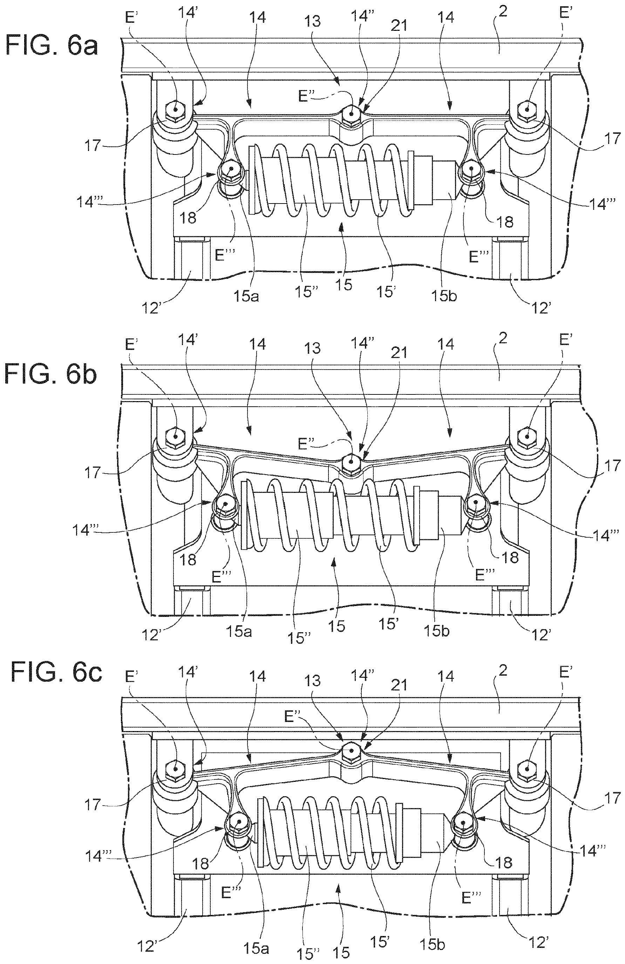

In the embodiment of figures 6a-6c, the above discussed structure of damping system 13 is analogous. The difference with respect to the above discussed structures lies in the fact that the second connection points 14'' are fused into a single hinge connection 21 , therefore the rockers 14 are connected directly together also via such hinge connection 21.

In particular, such single hinge connection 21 may be placed, along transversal axis C direction in a middle position with respect to first connection points 14'.

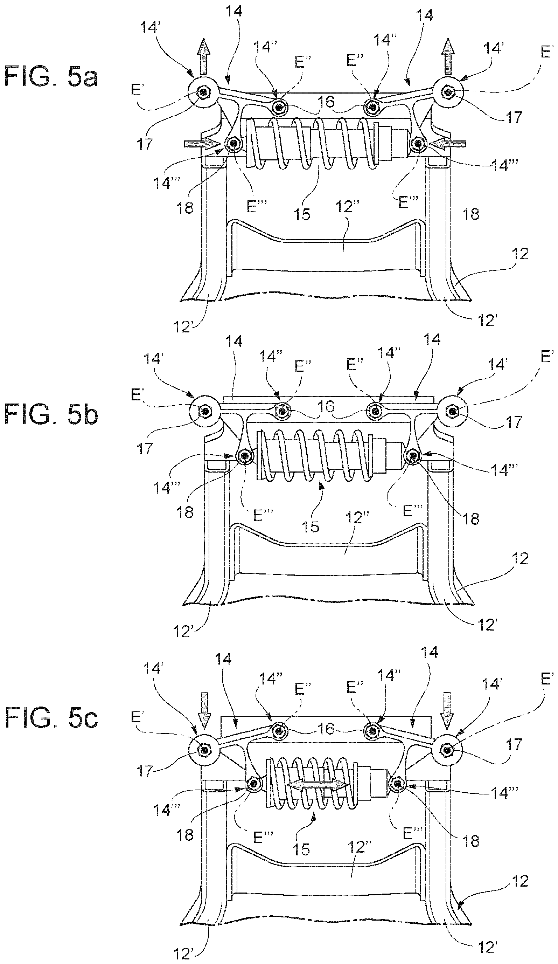

Making reference to figures 5A-5C or 6A-6C the operation of the embodiments of the invention as described above is the following.

During its operation, vehicle 1 moves on ground, therefore above its profile that may comprise variable heights. Front suspension portion 5 allows rotation of the cab 2 with respect to chassis and dampening via damping means 7 that avoid excessive or sudden contacts between cab and supports 8', 8'' . On the rear side, the load acting between the support portion 12 and the cab 4 is dampened via damping means 13. In particular, the relative motion is dampened by the damping means 15 that acts between rockers 14 that multiply their effect. Indeed, starting from a neutral situation as shown in figure 5B the rocker may allow movement of the cab as in the situation of figure 5A (lifting of cab 4 because of sudden descent of chassis 3 or lightening of cab 4) or of figure 5C (descent of cab 4 because of sudden lifting of chassis 3 or loading of cab 4). In both conditions of figures 5A, 5C damping means 15 acts to recall/push away third connection points 14''' that tends to move to get away or closer with respect to their neutral position due to rotation of rockers 14. Similarly, the silent block in first connection point 14' dampen the transmission of loads that further smooth the relative movement between cab and chassis.

In view of the foregoing, the advantages of the suspension system and vehicle according to the invention are apparent.

Thanks to the proposed suspension system it is possible to allows a dampened rear connection of the cab to chassis thereby improving the general effect of suspension system and in this way the overall comfort of the vehicle is increased.

In particular, the use of the damping system allows to provide a high damping effect without the need of big spaces and this suspension system can be used also in small tractors.

It is clear that modifications can be made to the described suspension system and vehicle which do not extend beyond the scope of protection defined by the claims.

For example, the proposed structures of supports of support portion may have different shapes while maintaining their function and according to the specific typology of vehicle to which the suspension system is applied.

Moreover, damping means proposed 7, 15 may be realized in different manner and with other devices with similar functions such as air bellows, hydraulic cylinders, different typologies of springs.

Similarly, rockers 14 may have different shapes or being realized in different pieces connected together.

## Claims

1. Suspension system (4) for a work vehicle (1) provided with a cab (2) and a chassis (3), said suspension system (4) being configured to damping the relative movement between said cab (2) and said chassis (3) and comprising a front suspension portion (5) and a rear suspension portion (6) along a longitudinal axis (A) of said vehicle (1),
said rear suspension portion (6) comprising a connection portion (12) and a damping system (13), said connection portion (12) comprising an upper extremity (12b) and a lower extremity (12a) along a vertical direction axis (B),
said upper extremity (12a) being operatively connected to said cab (2) via said damping system (13) and said lower extremity (12a) being fixedly connected to said chassis (3).

2. Suspension system according to claim 1, wherein said connection portion (12) comprises a pair of legs (12') each defining a respective upper and lower extremities (12a, 12b).

3. Suspension system according to claim 2, wherein said connection portion (12) further comprises a transversal member (12") connecting together said legs along a transversal axis direction (C) perpendicular to said longitudinal and vertical direction axis (A, B).

4. Suspension system according to any of the preceding claims, wherein said front suspension portion (5) comprises a right and a left bumper means (7) placed along a transversal axis direction (C) perpendicular to said longitudinal and vertical direction axis (A, B), each bumper means (7) being supported by a respective support element (8', 8'') fixedly connected to said chassis (3), said bumper means (7) being connected by stabilizer means (9).

5. Suspension system according to claim 4, wherein said stabilizer means (9) comprises a rod (8) rotatably carried about said transversal axis (C) by said support elements (8', 8").

6. Suspension system according to claim 4 or 5, wherein said bumper means (7) each comprises a connection element (7') configured to be fixedly carried by said cab (4) and a deformable element (7") operatively interposed between said connection element (7') and the respective support elements (8', 8").

7. Suspension system according to any of the preceding claims, wherein said damping system (13) comprises a pair of rockers (14) positioned along a transversal axis direction (C) perpendicular to said longitudinal and vertical direction axis (A, B) and damping means (15), each rocker (14) defining three connection points (14', 14'', 14‴), a first connection point (14') being configured to be operatively connected to said cab (2), a second connection point (14'') being operatively connected to said connection portion (12) and a third connection point (14‴), the third connection points (14‴) of the rockers (14) being operatively connected together by said damping means (15).

8. Suspension system according to claim 7, wherein said connection points (14', 14'', 14''') are connected to the respective element via hinge connections (16; 21, 17, 18).

9. Suspension system according to claim 7 or 8, wherein said first connection point (14') comprises a silent block.

10. Suspension system according to any of claims 7 to 9, wherein said rockers (14) have a substantial triangoloid shape wherein said connection points (14', 14'', 14''') are placed at the vertexes of such triangoloid shape.

11. Suspension system according to any of claims 7 to 10, wherein each rocker (14) defines a first arm connecting together said first and second connection points (14', 14'') and a second arm connecting said third connection point (14‴) to said first arm.

12. Suspension system according to any of claims 7 to 11, wherein said second connection points (14") define respective hinges connections (16) with said connection portion (12) that are spaced apart along said transversal direction axis (C).

13. Suspension system according to any of claims 7 to 11, wherein said second connection points (14'') define a common hinges connection (21) with said connection portion (12) .

14. Suspension system according to any of claims 8 to 13, wherein said connection hinges (16; 21, 17, 18) define respective hinge rotation axis (E',E'', E''') that are parallel one to the other and to said longitudinal axis (A).

15. Suspension system according to any of claims 8 to 14, wherein said damping means (13) comprises a cylinder (15') .

16. Suspension system according to any of claims 8 to 15, wherein said damping means (13) comprises elastic means (15") .

17. Suspension system according to claim 15 and 16, wherein said elastic means (15") acts in parallel with respect to said cylinder (15').

18. Vehicle (1) comprising a cab (2), a chassis (3) and a suspension system (4), said cab (2) being carried by said chassis (3) via said suspension system (4) that is realized according to any of claims 1 to 9.
